# EUROPÄISCHE PATENTSCHRIFT

(11) **EP 3 275 629 B1**
(45) Veröffentlichungstag und Bekanntmachung des Hinweises auf die Patenterteilung: **01.07.2020**
(21) Anmeldenummer: 17172781.1
(22) Anmeldetag: 24.05.2017
(51) Int. Cl.: B29C 64/245, B29C 64/25, B22F 3/105

(54) **PULVERMODUL FÜR EINE VORRICHTUNG ZUR ADDITIVEN HERSTELLUNG DREIDIMENSIONALER OBJEKTE**
POWDER MODULE FOR AN APPARATUS FOR ADDITIVE MANUFACTURING OF THREE-DIMENSIONAL OBJECTS
BLOC DE POUDRE POUR UN DISPOSITIF DE FABRICATION ADDITIVE D'OBJETS TRIDIMENSIONNELS

(30) Priorität: 29.07.2016 DE 102016114058
(43) Veröffentlichungstag der Anmeldung: 31.01.2018
(73) Patentinhaber: CL Schutzrechtsverwaltungs GmbH, 96215 Lichtenfels (DE)
(72) Erfinder: HERZOG, Frank, 96215 Lichtenfels (DE); BECHMANN, Florian, 96215 Lichtenfels (DE); SCHÖDEL, Frank, 96317 Kronach (DE)
(74) Vertreter: Hafner & Kohl PartmbB

(56) Entgegenhaltungen:
- US-A1- 2001 045 678
- US-A1- 2002 090 410
- US-A1- 2004 084 814

## Beschreibung

Die Erfindung betrifft ein Pulvermodul für eine Vorrichtung zur additiven Herstellung dreidimensionaler Objekte, welches eine einen mit pulverförmigem Baumaterial befüllbaren Pulverraum begrenzende Pulverkammer sowie eine in dem Pulverraum angeordnete, den Pulverraum bodenseitig begrenzende Trageinrichtung umfasst, gemäss den Merkmalen des Anspruchs 1. Derartige Pulvermodule sind, etwa in Form von Bau- oder Dosiermodulen, als Funktionskomponenten von Vorrichtungen zur additiven Herstellung dreidimensionaler Objekte bekannt. Bei entsprechenden Pulvermodulen ist konstruktionsbedingt zwischen den den Pulverraum begrenzenden Pulverkammerwandungen und der Trageinrichtung, bei welcher es sich typischerweise um eine Pulverkammerplatte bzw. einen eine solche lagernden Pulverkammertisch handelt, ein sich entlang der den Pulverraum begrenzenden Pulverkammerwandung erstreckender Spaltraum gebildet, durch welchen pulverförmiges Baumaterial aus dem Pulverraum in einen unterhalb der Trageinrichtung liegenden Pulvermodulbereich gelangen kann. US20020090410 offenbart eine Vorrichtung zur Entfernung ungebundenen Pulvermaterials in additiven Fertigungsprozessen.

Das in den Bereich unterhalb der Trageinrichtung gelangte pulverförmige Baumaterial wird üblicherweise in einem Aufnahmebehältnis aufgenommen bzw. gesammelt und vermittels einer Strömungserzeugungseinrichtung aus dieser entfernt. Aufgrund der gegebenen konstruktiven Auslegung der Aufnahmebehältnisse sind sehr hohe Strömungsleistungen erforderlich, um die Entfernung von pulverförmigem Baumaterial aus den Aufnahmebehältnissen notwendigen Strömungsgeschwindigkeiten zu realisieren.

Der Erfindung liegt die Aufgabe zugrunde, ein demgegenüber, insbesondere im Hinblick auf eine effizientere Entfernung von Baumaterial, verbessertes Pulvermodul für eine Vorrichtung zur additiven Herstellung dreidimensionaler Objekte anzugeben.

Die Aufgabe wird durch ein Pulvermodul für eine Vorrichtung zur additiven Herstellung dreidimensionaler Objekte gemäß Anspruch 1 gelöst. Die hierzu abhängigen Ansprüche betreffen mögliche Ausführungsformen des Pulvermoduls.

Das hierin beschriebene Pulvermodul stellt eine Funktionskomponente einer Vorrichtung zur additiven Herstellung dreidimensionaler Objekte dar. Eine entsprechende Vorrichtung ist zur additiven Herstellung wenigstens eines dreidimensionalen Objekts (im Weiteren abgekürzt als "Objekt" bezeichnet) durch sukzessive schichtweise selektive Belichtung und damit einhergehende Verfestigung einzelner Baumaterialschichten aus einem verfestigbaren pulverförmigen Baumaterial (im Weiteren abgekürzt als "Baumaterial" bezeichnet) vermittels wenigstens eines Energiestrahls eingerichtet. Bei dem Baumaterial kann es sich um ein Metall-, Kunststoff- und/oder Keramikpulver handeln. Unter einem Metall-, Kunststoff- oder Keramikpulver kann auch ein Pulvergemisch unterschiedlicher Metalle, Kunststoffe oder Keramiken verstanden werden. Bei dem Energiestrahl kann es sich um einen Laserstrahl handeln. Bei der Vorrichtung kann es sich entsprechend um eine Vorrichtung zur Durchführung selektiver Laserschmelzverfahren (abgekürzt SLM-Verfahren) oder selektiver Lasersinterverfahren (abgekürzt SLS-Verfahren), d. h. um eine selektive Laserschmelzvorrichtung (SLM-Vorrichtung) bzw. eine selektive Lasersintervorrichtung (SLS-Vorrichtung) handeln.

Bei dem Pulvermodul kann es sich im Allgemeinen um jedwedes Pulvermodul handeln, welches zur Aufnahme und/oder Abgabe von Baumaterial eingerichtet ist. Im Besonderen kann es sich bei dem Pulvermodul um ein Baumodul, in welchem der eigentliche additive Aufbau dreidimensionaler Objekte erfolgt und welches hierfür im Rahmen der Durchführung additiver Herstellungsprozesse sukzessive schichtweise mit selektiv zu verfestigendem Baumaterial befüllt wird, um ein Dosiermodul, über welches im Rahmen der Durchführung additiver Herstellungsprozesse sukzessive schichtweise Baumaterial in eine Prozesskammer dosiert wird, oder um ein Auffangmodul, welches im Rahmen der Durchführung additiver Herstellungsprozesse mit nicht verfestigtem Baumaterial befüllt wird, handeln.

Das Pulvermodul umfasst eine Pulverkammer. Die Pulverkammer begrenzt einen mit Baumaterial befüllbaren Pulverraum. Konkret ist der Pulverraum zumindest seitlich durch Wandungen der Pulverkammer (Pulverkammerwandungen) der in der Regel hohlquaderartig bzw. hohlzylinderartig ausgebildeten Pulverkammer begrenzt. Bodenseitig ist der Pulverraum durch eine Trageinrichtung begrenzt. Bei der Trageinrichtung kann es sich um eine Pulverkammerplatte bzw. einen eine solche lagernden Pulverkammertisch handeln. Die Trageinrichtung ist typischerweise zwischen zwei Endstellungen, d. h. zwischen einer (bezogen auf die Höhe des Pulvermoduls) oberen und einer unteren Endstellung, relativ zu der Pulverkammer bewegbar gelagert; die bewegbare Lagerung der Trageinrichtung ist typischerweise durch eine mit dieser gekoppelte, insbesondere (elektro)motorische, Antriebs- bzw. Aktoreinrichtung realisiert.

Zwischen wenigstens einer den Pulverraum begrenzenden Pulverkammerwandung und der Trageinrichtung ist ein sich zumindest abschnittsweise entlang der den Pulverraum begrenzenden Pulverkammerwandung erstreckender, insbesondere ringartig um die Trageinrichtung umlaufender, Spaltraum gebildet. Durch den Spaltraum kann Baumaterial aus dem Pulverraum in einen unterhalb der Trageinrichtung liegenden Pulvermodulbereich gelangen. Der aus konstruktiven Gründen gegebene Spaltraum stellt einen "Leckagebereich" dar, über welchen Baumaterial, trotz etwaig vorhandener Dichtelemente, aus dem Pulverraum in einen unterhalb der Trageinrichtung liegenden Pulvermodulbereich gelangen kann.

Bei dem hierin beschriebenen Pulvermodul mündet der Spaltraum, insbesondere unmittelbar, in einen Aufnahmebereich eines an der Pulverkammer angeordneten oder ausgebildeten Aufnahmeelements; der Spaltraum geht also, insbesondere unmittelbar, in den Aufnahmebereich des an der Pulverkammer angeordneten oder ausgebildeten Aufnahmeelements über. Mit anderen Worten fluchtet der Spaltraum mit dem aufnahmeelementseitigen Aufnahmebereich. Der Aufnahmebereich ist als zur Aufnahme von Baumaterial aus dem Spaltraum eingerichtete, insbesondere ringartig umlaufende, in sich geschlossene Strömungskanalstruktur ausgebildet bzw. umfasst eine solche. In der Strömungskanalstruktur kann sich ein geschlossener Strömungsfluidkreislauf ausbilden. Die Strömungskanalstruktur ist strömungstechnisch im Hinblick auf eine möglichst optimale Durchströmbarkeit mit einem Strömungsfluid, typischerweise einem Gas, z. B. Luft, ausgelegt. Die konstruktive Auslegung der Strömungskanalstruktur ist insbesondere so gewählt, dass vergleichsweise geringe Strömungsleistungen erforderlich sind, um die zur Entfernung von Baumaterial aus dem Aufnahmebereich notwendigen Strömungsgeschwindigkeiten zu realisieren. Die konstruktive Auslegung der Strömungskanalstruktur ist dabei insbesondere so gewählt, dass sich in dieser eine (weitgehend) laminare Strömung ausbilden lässt; die Strömungskanalstruktur weist typischerweise keine Bereiche auf, welche eine unerwünschte Verwirbelung eines diese durchströmenden Strömungsfluids ermöglichen.

Zur Einbringung eines Strömungsfluids in die Strömungskanalstruktur umfasst das Aufnahmeelement typischerweise wenigstens ein Anschlusselement zum Anschluss einer Strömungserzeugungseinrichtung, welche zur Erzeugung einer die Strömungskanalstruktur durchströmenden Fluidströmung (Reinigungsströmung) zur Entfernung von in der Strömungskanalstruktur befindlichem Baumaterial aus der Strömungskanalstruktur eingerichtet ist. Selbstverständlich kann das Aufnahmeelement mehrere Anschlusselemente umfassen, wobei ein erstes Anschlusselement zur Einleitung des Strömungsfluids in die Strömungskanalstruktur und ein weiteres Anschlusselement zur Ausleitung des mit Baumaterial beladenen Strömungsfluids aus der Strömungskanalstruktur dienen kann. Bei der Fluidströmung kann es sich insbesondere um eine Saug- oder Gebläseströmung handeln; das Strömungsfluid kann entsprechend als Saug- oder Gebläseströmung strömen. Entsprechend kann es sich bei der Strömungserzeugungseinrichtung um eine Saug- oder Gebläseeinrichtung handeln.

Zur gezielten Beeinflussung der Durchströmbarkeit bzw. der Strömungseigenschaften der Strömungskanalstruktur kann diese wenigstens ein strömungsbeeinflussendes Strömungselement umfassen. Ein entsprechendes Strömungselement kann im einfachsten Fall durch eine gezielte Veränderung der Querschnittsgeometrie der Strömungskanalstruktur gebildet sein. Beispielsweise kann durch gezielte Veränderung der Querschnittsgeometrie eine Erhöhung oder Erniedrigung der Strömungsgeschwindigkeit des die Strömungskanalstruktur durchströmenden Strömungsfluids (gemäß dem Venturi-Effekt) realisiert werden.

Die Strömungskanalstruktur weist eine einseitig offene, z. B. U-, V- oder C-förmige, Querschnittsgeometrie auf. Konkret handelt es sich bei der Strömungskanalstruktur um eine nutkanalartige Ausnehmung in dem Aufnahmeelement bzw. dem Aufnahmebereich. Die Strömungskanalstruktur ist nach "oben" offen; die Öffnung (Mündungsöffnung) der Strömungskanalstruktur ist dem durch die Pulverkammer begrenzten Pulverraum zugewandt.

Es wurde erwähnt, dass die Strömungskanalstruktur insbesondere ringartig umlaufend ausgebildet ist. Hierunter ist zu verstehen, dass die Strömungskanalstruktur sich (im Wesentlichen) z. B. entlang den Abmessungen, insbesondere den Außen- oder Innenabmessungen, der Trageinrichtung oder der Pulverkammerwandung oder einem zwischen diesen liegenden Bereich erstreckend ausgebildet ist.

Die Strömungskanalstruktur ist typischerweise unterhalb der Trageinrichtung angeordnet oder ausgebildet.

Das Pulvermodul kann ein Führungselement, welches den Spaltraum zumindest abschnittsweise mit begrenzt, umfassen. Das Führungselement ist typischerweise der den Spaltraum begrenzenden Pulverkammerwandung gegenüber liegend angeordnet oder ausgebildet. Das Führungselement erstreckt sich typischerweise parallel zu der diesem gegenüber liegenden Pulverkammerwandung. Die Geometrie des Führungselements ist an die Geometrie der Pulverkammer angepasst, sodass der Spaltraum zumindest abschnittsweise zwischen dem Führungselement und der den Pulverraum begrenzenden Pulverkammerwandung ausgebildet ist.

Das Führungselement kann zwischen einer Schließstellung und einer Offenstellung, und umgekehrt, relativ zu der Strömungskanalstruktur bzw. dem Aufnahmeelement bewegbar gelagert sein. In der Schließstellung ist das Führungselement, d. h. insbesondere ein der strömungskanalstrukturseitigen Mündungsöffnung zugewandter Schließabschnitt des Führungselements, derart relativ zu der Strömungskanalstruktur bewegt, d. h. insbesondere gegen die strömungskanalstrukturseitige Mündungsöffnung bewegt, dass ein Eindringen von Baumaterial in die Strömungskanalstruktur nicht möglich ist. In der Schließstellung ist es also nicht möglich, dass Baumaterial aus dem Spaltraum in den aufnahmeelementseitigen Aufnahmebereich bzw. in die Strömungskanalstruktur gelangt. In der Offenstellung ist das Führungselement, d. h. insbesondere ein der strömungskanalstrukturseitigen Mündungsöffnung zugewandter Schließabschnitt des Führungselements, derart relativ zu der Strömungskanalstruktur bewegt, d. h. insbesondere von der strömungskanalstrukturseitigen Mündungsöffnung weg bewegt, dass ein Eindringen von Baumaterial in die Strömungskanalstruktur möglich ist. In der Offenstellung ist es also möglich, dass Baumaterial aus dem Spaltraum in den aufnahmeelementseitigen Aufnahmebereich bzw. in die Strömungskanalstruktur gelangt.

Die bewegbare Lagerung des Führungselements kann beispielsweise durch eine dem Führungselement zugeordnete, insbesondere (elektro)motorische, Antriebs- bzw. Aktoreinrichtung realisiert sein.

Eine bewegbare Lagerung des Führungselements kann jedoch auch durch eine Bewegungskopplung des Führungselements mit der Trageinrichtung realisiert sein. Die Bewegungskopplung des Führungselements mit der Trageinrichtung kann beispielsweise durch eine einstückige Ausbildung des Führungselements mit der Trageinrichtung realisiert sein. Das Führungselement kann z. B. einen prismen- bzw. zylinderartigen Fortsatz der Trageinrichtung bilden. Alternativ zu der einstückigen Ausbildung kann das Führungselement auch als gesondertes, insbesondere prismen- bzw. zylinderartiges, an der Trageinrichtung befestigbares bzw. befestigtes Bauteil ausgebildet sein.

Es wurde erwähnt, dass die Trageinrichtung typischerweise zwischen zwei Endstellungen, d. h. zwischen einer (bezogen auf die Höhe des Pulvermoduls) oberen und einer unteren Endstellung, relativ zu der Pulverkammer bewegbar gelagert ist. Im Falle einer Bewegungskopplung des Führungselements mit der Trageinrichtung entspricht die Schließstellung des Führungselements typischerweise der unteren Endstellung der Trageinrichtung. Mithin ist das Führungselement in die Schließstellung bewegt, wenn die Trageinrichtung in die untere Endstellung bewegt ist.

Wie erwähnt, kann die Strömungskanalstruktur eine dem Spaltraum zugewandte Mündungsöffnung aufweisen. Das Aufnahmeelement bzw. der Aufnahmebereich kann im Bereich wenigstens eines die strömungskanalstrukturseitige Mündungsöffnung begrenzenden Randabschnitts mit wenigstens einem (winklig) geneigt oder (konkav oder konvex) gewölbt verlaufend ausgebildeten Flächenabschnitt ausgebildet sein. Die mit einem geneigt bzw. gewölbt verlaufend ausgebildeten Flächenabschnitt versehene Ausbildung eines die Mündungsöffnung begrenzenden Randabschnitts ist zweckmäßig, als diese sicherstellt, dass sich außerhalb der Strömungskanalstruktur kein Baumaterial zwischen dem Spaltraum und der Strömungskanalstruktur ansammeln kann. Durch die geneigt bzw. gewölbt verlaufende Formgebung des Randabschnitts ist das Baumaterial nach dem Prinzip eines Trichters "gezwungen" in die Strömungskanalstruktur zu gelangen.

Das Führungselement, sofern vorhanden, kann, insbesondere im Bereich eines freien Endes, mit einer zu dem randabschnittseitigen Flächenabschnitt des Aufnahmeelements gegengleich (geneigt bzw. gewölbt) ausgebildeten Flächenabschnitt ausgebildet sein. Derart kann, insbesondere in der Schließstellung des Führungselements, eine (verbesserte) Abdichtung der Strömungskanalstruktur realisiert werden, welche eine effiziente Durchströmung der Strömungskanalstruktur mit dem Strömungsfluid gewährleistet, d. h. insbesondere einen unerwünschten Austritt von, gegebenenfalls mit Baumaterial beladenem, Strömungsfluid aus der Strömungskanalstruktur verhindert.

Um die Größe (lichte Weite) der strömungskanalstrukturseitigen Mündungsöffnung zu verringern, kann das Pulvermodul ein auf das Aufnahmeelement aufsetzbares oder (im Montagezustand des Pulvermoduls) aufgesetztes, die Mündungsöffnung verkleinerndes Deckelelement umfassen. Das Deckelelement kann - analog des die strömungskanalstrukturseitige Mündungsöffnung begrenzenden aufnahmeelementseitigen Randabschnitts - im Bereich wenigstens eines die Mündungsöffnung begrenzenden Randabschnitts mit wenigstens einem (winklig) geneigt oder (konkav oder konvex) gewölbt verlaufend ausgebildeten Flächenabschnitt ausgebildet sein. Die mit einem geneigt bzw. gewölbt verlaufend ausgebildeten Flächenabschnitt versehene Ausbildung eines die Mündungsöffnung begrenzenden Randabschnitts eines entsprechenden Deckelelements ist zweckmäßig, als auch diese sicherstellt, dass sich außerhalb der Strömungskanalstruktur kein Baumaterial zwischen dem Spaltraum und der Strömungskanalstruktur ansammeln kann. Durch die geneigt bzw. gewölbt verlaufende Formgebung des Randabschnitts ist das Baumaterial nach dem Prinzip eines Trichters "gezwungen" in die Strömungskanalstruktur zu gelangen.

Sofern vorhanden, kann das Führungselement, insbesondere im Bereich eines freien Endes, gegebenenfalls zusätzlich, mit einem zu dem randabschnittseitigen Flächenabschnitt des Deckelelements gegengleich ausgebildeten Flächenabschnitt ausgebildet sein. Derart kann eine (verbesserte) Abdichtung der Strömungskanalstruktur, insbesondere in der Schließstellung des Führungselements, realisiert werden, welche eine effiziente Durchströmung der Strömungskanalstruktur mit dem Strömungsfluid gewährleistet, d. h. insbesondere einen unerwünschten Austritt von, gegebenenfalls mit Baumaterial beladenem, Strömungsfluid aus der Strömungskanalstruktur verhindert.

Neben dem Pulvermodul betrifft die Erfindung auch eine Vorrichtung zur additiven Herstellung dreidimensionaler Objekte. Die Vorrichtung, bei welcher es sich insbesondere um eine SLS- oder SLM-Vorrichtung handelt, zeichnet sich dadurch aus, sie wenigstens ein wie beschriebenes Pulvermodul umfasst. Sämtliche Ausführungen im Zusammenhang mit dem Pulvermodul gelten sonach analog für die Vorrichtung.

Die Erfindung ist anhand von Ausführungsbeispielen in den Zeichnungsfiguren näher erläutert. Dabei zeigen:
- Fig. 1, 2: je eine Prinzipdarstellung eines Pulvermoduls gemäß einem Ausführungsbeispiel; und
- Fig. 3: eine Prinzipdarstellung eines Aufnahmeelements des in den Fig. 1, 2 gezeigten Pulvermoduls.

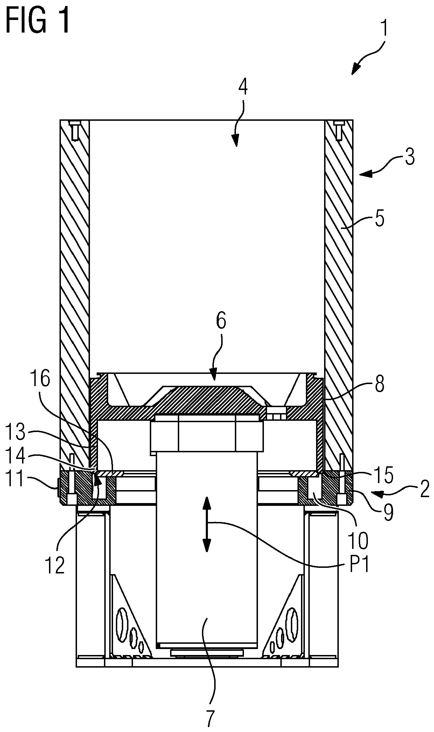

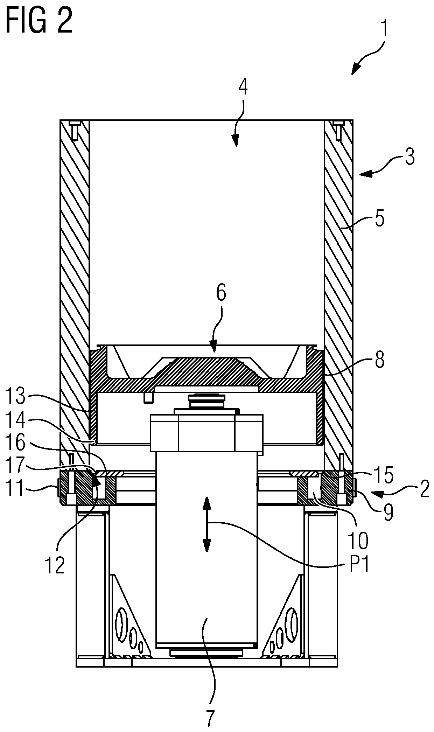

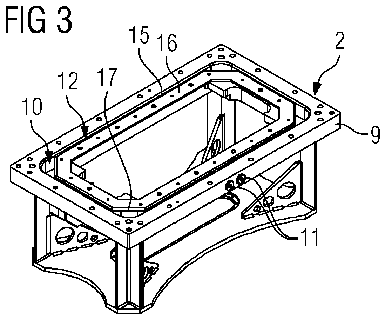

Die Fig. 1 - 2 zeigen je eine Prinzipdarstellung eines Pulvermoduls 1 gemäß einem Ausführungsbeispiel. Das Pulvermodul 1 ist in den Fig. 1, 2 jeweils in einer (längs)geschnittenen Ansicht dargestellt. Fig. 3 zeigt eine Prinzipdarstellung eines Aufnahmeelements 2 des in den Fig. 1, 2 gezeigten Pulvermoduls 1 in einer gesonderten perspektivischen Ansicht.

Das Pulvermodul 1 stellt eine Funktionskomponente einer Vorrichtung (nicht gezeigt) zur additiven Herstellung dreidimensionaler Objekte dar. Eine entsprechende Vorrichtung ist zur additiven Herstellung wenigstens eines Objekts durch sukzessive schichtweise selektive Belichtung und damit einhergehende Verfestigung einzelner Baumaterialschichten aus einem verfestigbaren Baumaterial (nicht gezeigt) vermittels wenigstens eines Energiestrahls (nicht gezeigt) eingerichtet. Bei dem verfestigbaren Baumaterial kann es sich z. B. um ein Metallpulver handeln. Unter einem Metallpulver kann auch ein Pulvergemisch unterschiedlicher Metalle verstanden werden. Für ein Metallpulver gilt insofern, dass es sich hierbei auch um ein Pulver aus wenigstens einer Metalllegierung handeln kann. Bei dem Energiestrahl kann es sich um einen Laserstrahl handeln. Bei der Vorrichtung kann es sich insgesamt um eine Vorrichtung zur Durchführung selektiver Laserschmelzverfahren (abgekürzt SLM-Verfahren) oder selektiver Lasersinterverfahren (abgekürzt SLS-Verfahren), d. h. um eine selektive Laserschmelzvorrichtung (SLM-Vorrichtung) bzw. eine selektive Lasersintervorrichtung (SLS-Vorrichtung) handeln.

Bei dem Pulvermodul 1 kann es sich im Allgemeinen um jedwedes Pulvermodul handeln, welches zur Aufnahme und/oder Abgabe von Baumaterial eingerichtet ist. Im Besonderen kann es sich bei dem Pulvermodul 1 um ein Baumodul, in welchem der eigentliche additive Aufbau von Objekten erfolgt und welches hierfür im Rahmen der Durchführung additiver Herstellungsprozesse sukzessive schichtweise mit selektiv zu verfestigendem Baumaterial befüllt wird, um ein Dosiermodul, über welches im Rahmen der Durchführung additiver Herstellungsprozesse sukzessive schichtweise Baumaterial in eine Prozesskammer dosiert wird, oder um ein Auffangmodul, welches im Rahmen der Durchführung additiver Herstellungsprozesse mit nicht verfestigtem Baumaterial befüllt wird, handeln. Bei dem in den Fig. gezeigten Ausführungsbeispiel handelt es sich bei dem Pulvermodul 1 um ein Baumodul, wobei nachfolgende Erläuterungen nicht auf die Ausführung des Pulvermoduls 1 als Baumodul beschränkt sind.

Das Pulvermodul 1 umfasst eine Pulverkammer 3. Die Pulverkammer 3 begrenzt einen mit Baumaterial befüllbaren Pulverraum 4. Anhand der Fig. 1, 2 ist ersichtlich, dass der Pulverraum 4 seitlich durch eine Pulverkammerwandung 5 der in der Regel hohlquaderartig bzw. hohlzylinderartig ausgebildeten Pulverkammer 3 begrenzt ist. Bodenseitig ist der Pulverraum 4 durch eine Trageinrichtung 6 begrenzt. Bei der Trageinrichtung 6 handelt es sich um einen eine Pulverkammerplatte (nicht gezeigt) lagernden Pulverkammertisch. Die Trageinrichtung 6 ist, wie durch den Doppelpfeil P1 angedeutet, zwischen zwei Endstellungen, d. h. zwischen einer (bezogen auf die Höhe des Pulvermoduls 1) oberen und einer in Fig. 1 gezeigten unteren Endstellung, relativ zu der Pulverkammer 3 bewegbar gelagert; die bewegbare Lagerung der Trageinrichtung 6 ist durch eine mit dieser gekoppelte, insbesondere (elektro)motorische, Antriebs- bzw. Aktoreinrichtung 7 realisiert.

Zwischen der den Pulverraum 4 begrenzenden Pulverkammerwandung 5 und der Trageinrichtung 6 ist ein sich (in vertikaler Richtung) abschnittsweise entlang der den Pulverraum 4 begrenzenden Pulverkammerwandung 5 erstreckender, insbesondere ringartig um die Trageinrichtung 6 umlaufender, Spaltraum 8 gebildet. Durch den Spaltraum 8 kann Baumaterial aus dem Pulverraum 4 in einen unterhalb der Trageinrichtung 6 liegenden Pulvermodulbereich gelangen. Der Spaltraum 8 stellt einen "Leckagebereich" dar, über welchen Baumaterial, trotz etwaig vorhandener Dichtelemente (nicht gezeigt), aus dem Pulverraum 4 in den unterhalb der Trageinrichtung 6 liegenden Pulvermodulbereich gelangen kann.

Der Spaltraum 8 mündet unmittelbar in einen Aufnahmebereich 9 eines unterhalb dieser an der Pulverkammer 3 angeordneten, an der Pulverkammer 3 in dem in den Fig. gezeigten Ausführungsbeispiel über eine Schraubbefestigung befestigten Aufnahmeelements 2; der Spaltraum 8 geht also unmittelbar in den Aufnahmebereich 9 des unterhalb dieser an der Pulverkammer 3 angeordneten Aufnahmeelements 2 über. Insbesondere anhand von Fig. 3 ist ersichtlich, dass das Aufnahmeelement 2 in dem in den Fig. gezeigten Ausführungsbeispiel durch eine rahmenartige Aufnahmeelementstruktur (nicht näher bezeichnet) gebildet sein kann.

Der aufnahmeelementseitige Aufnahmebereich 9 ist als zur Aufnahme von Baumaterial aus dem Spaltraum 8 eingerichtete, insbesondere ringartig umlaufende, in sich geschlossene Strömungskanalstruktur 10 ausgebildet bzw. umfasst eine solche. In der Strömungskanalstruktur 10 kann sich ein geschlossener Strömungsfluidkreislauf ausbilden. Die Formulierung "ringartig umlaufend" ist im Zusammenhang mit dem Ausführungsbeispiel dahin zu verstehen, dass die Strömungskanalstruktur 10 sich (im Wesentlichen) entlang den Abmessungen der Trageinrichtung 6 erstreckend ausgebildet ist. Anhand der Fig. ist ersichtlich, dass es sich bei der Strömungskanalstruktur 10 um eine nutkanalartige Ausnehmung in dem Aufnahmeelement 2 bzw. dem Aufnahmebereich 9 handelt.

Die Strömungskanalstruktur 10 ist strömungstechnisch im Hinblick auf eine möglichst optimale Durchströmbarkeit mit einem Strömungsfluid, typischerweise einem Gas, z. B. Luft, ausgelegt. Die konstruktive Auslegung der Strömungskanalstruktur 10 ist so gewählt, dass vergleichsweise geringe Strömungsleistungen erforderlich sind, um die zur Entfernung von Baumaterial aus dem Aufnahmebereich 9 notwendigen Strömungsgeschwindigkeiten zu realisieren. Insbesondere ermöglicht die konstruktive Auslegung der Strömungskanalstruktur 10 die Ausbildung einer (weitgehend) laminaren Strömung.

Zur Einbringung eines Strömungsfluids in die Strömungskanalstruktur 10 umfasst das Aufnahmeelement 2 Anschlusselemente 11 zum Anschluss wenigstens einer Strömungserzeugungseinrichtung (nicht gezeigt), welche zur Erzeugung einer die Strömungskanalstruktur 10 durchströmenden Fluidströmung (Reinigungsströmung) zur Entfernung von in der Strömungskanalstruktur 10 befindlichem Baumaterial aus der Strömungskanalstruktur 10 eingerichtet ist. In dem in den Fig. gezeigten Ausführungsbeispiel sind die Anschlusselemente 11 im Bereich des Aufnahmebereichs 9 angeordnet bzw. ausgebildet. Ein erstes Anschlusselement 11 kann zur Einleitung des Strömungsfluids in die Strömungskanalstruktur 10 und ein zweites Anschlusselement kann zur Ausleitung des mit Baumaterial beladenen Strömungsfluids aus der Strömungskanalstruktur 10 dienen. Das Strömungsfluid kann in Form einer Saug- oder Gebläseströmung strömen; entsprechend kann es sich bei der Strömungserzeugungseinrichtung um eine Saug- oder Gebläseeinrichtung handeln.

Zur gezielten Beeinflussung der Durchströmbarkeit bzw. der Strömungseigenschaften der Strömungskanalstruktur 10 kann diese strömungsbeeinflussendes Strömungselemente (nicht gezeigt) umfassen. Ein entsprechendes Strömungselement kann im einfachsten Fall durch eine gezielte Veränderung der Querschnittsgeometrie der Strömungskanalstruktur 10 gebildet sein. Beispielsweise kann durch gezielte Veränderung der Querschnittsgeometrie eine Erhöhung oder Erniedrigung der Strömungsgeschwindigkeit des die Strömungskanalstruktur 10 durchströmenden Strömungsfluids realisiert werden.

Die Strömungskanalstruktur 10 weist eine einseitig, d. h. nach oben, offene, in dem in den Fig. gezeigten Ausführungsbeispiel (Im Wesentlichen) U-förmige Querschnittsgeometrie auf. Die Öffnung (Mündungsöffnung 12) der Strömungskanalstruktur 10 ist dem durch die Pulverkammer 3 begrenzten Pulverraum 4 zugewandt.

Das Pulvermodul 1 umfasst ein Führungselement 13, welches den Spaltraum 8 abschnittsweise mit begrenzt. Das Führungselement 13 ist der den Spaltraum 8 begrenzenden Pulverkammerwandung 5 gegenüber liegend angeordnet bzw. ausgebildet und erstreckt sich parallel zu dieser. Die Geometrie des Führungselements 13 ist an die Geometrie der Pulverkammer 3 angepasst, sodass der Spaltraum 8 zwischen dem Führungselement 13 und der Pulverkammerwandung 5 ausgebildet ist.

Das Führungselement 13 ist zwischen einer in Fig. 1 gezeigten Schließstellung und einer in Fig. 2 gezeigten Offenstellung, und umgekehrt, relativ zu der Strömungskanalstruktur 10 bzw. dem Aufnahmeelement 2 bewegbar gelagert. In der Schließstellung ist das Führungselement 13, d. h. insbesondere ein der strömungskanalstrukturseitigen Mündungsöffnung 12 zugewandter Schließabschnitt 14 des Führungselements 13, derart relativ zu der Strömungskanalstruktur 10 bewegt, d. h. insbesondere gegen die strömungskanalstrukturseitige Mündungsöffnung 12 bewegt, dass ein Eindringen von Baumaterial in die Strömungskanalstruktur 10 nicht möglich ist. In der Schließstellung ist es also nicht möglich, dass Baumaterial aus dem Spaltraum 8 in den aufnahmeelementseitigen Aufnahmebereich 9 bzw. in die Strömungskanalstruktur 10 gelangt. In der Offenstellung ist das Führungselement 13, d. h. insbesondere der der strömungskanalstrukturseitigen Mündungsöffnung 12 zugewandte Schließabschnitt 14, derart relativ zu der Strömungskanalstruktur 10 bewegt, d. h. insbesondere von der strömungskanalstrukturseitigen Mündungsöffnung 12 weg bewegt, dass ein Eindringen von Baumaterial in die Strömungskanalstruktur 10 möglich ist. In der Offenstellung ist es also möglich, dass Baumaterial aus dem Spaltraum 8 in den aufnahmeelementseitigen Aufnahmebereich 9 bzw. in die Strömungskanalstruktur 10 gelangt.

In dem in den Fig. gezeigten Ausführungsbeispiel ist die bewegbare Lagerung des Führungselements 13 durch eine Bewegungskopplung des Führungselements 13 mit der Trageinrichtung 6 realisiert. Die Bewegungskopplung des Führungselements 13 mit der Trageinrichtung 6 ist durch eine einstückige Ausbildung des Führungselements 13 mit der Trageinrichtung 6 realisiert. Das Führungselement 13 bildet einen prismen- bzw. zylinderartigen Fortsatz der Trageinrichtung 6.

Wie erwähnt, ist die Trageinrichtung 6 zwischen zwei Endstellungen, d. h. zwischen einer (bezogen auf die Höhe des Pulvermoduls 1) oberen und einer unteren Endstellung, relativ zu der Pulverkammer 3 bewegbar gelagert. Anhand von Fig. 1 ist ersichtlich, dass die Schließstellung des Führungselements 13 der (ebenso in Fig. 1 gezeigten) unteren Endstellung der Trageinrichtung 6 entspricht. Mithin ist das Führungselement 13 in die Schließstellung bewegt, wenn die Trageinrichtung 6 in die untere Endstellung bewegt ist.

Das Aufnahmeelement 2 bzw. der Aufnahmebereich 9 ist im Bereich eines die Mündungsöffnung 12 begrenzenden Randabschnitts (nicht näher bezeichnet) mit einem winklig geneigt verlaufend ausgebildeten Flächenabschnitt 15 in Form einer Fase ausgebildet. Die mit einem geneigt verlaufend ausgebildeten Flächenabschnitt versehene Ausbildung des Randabschnitts ist zweckmäßig, als diese sicherstellt, dass sich außerhalb der Strömungskanalstruktur 10 kein Baumaterial zwischen dem Spaltraum 8 und der Strömungskanalstruktur 10 ansammeln kann. Durch die geneigt verlaufende Formgebung des Randabschnitts ist das Baumaterial nach dem Prinzip eines Trichters "gezwungen" in die Strömungskanalstruktur 10 zu gelangen.

Das Führungselement 13 ist im Bereich eines freien Endes, d. h. im Bereich des Schließabschnitts 14 mit einer zu dem randabschnittseitigen Flächenabschnitt 15 des Aufnahmeelements 9 gegengleich (geneigt) ausgebildeten Flächenabschnitt (nicht näher bezeichnet) ausgebildet. Derart kann in der Schließstellung des Führungselements 13 eine (verbesserte) Abdichtung der Strömungskanalstruktur 10 realisiert werden, welche eine effiziente Durchströmung der Strömungskanalstruktur 10 mit dem Strömungsfluid gewährleistet.

Um die Größe (lichte Weite) der strömungskanalstrukturseitigen Mündungsöffnung 12 zu verringern, umfasst das Pulvermodul 1 in dem in den Fig. gezeigten Ausführungsbeispiel ein auf das Aufnahmeelement 9 aufsetzbares bzw. (im Montagezustand des Pulvermoduls 1) aufgesetztes, die Mündungsöffnung 12 verkleinerndes Deckelelement 16. Das Deckelelement 16 ist - analog des die strömungskanalstrukturseitige Mündungsöffnung 12 begrenzenden aufnahmeelementseitigen Randabschnitts - im Bereich eines die Mündungsöffnung 12 begrenzenden Randabschnitts (nicht näher bezeichnet) mit einem (winklig) geneigt verlaufend ausgebildeten Flächenabschnitt 17 in Form einer Fase ausgebildet. Die mit einem geneigt verlaufend ausgebildeten Flächenabschnitt 17 versehene Ausbildung des Deckelelements 16 ist zweckmäßig, als auch diese sicherstellt, dass sich außerhalb der Strömungskanalstruktur 10 kein Baumaterial zwischen dem Spaltraum 8 und der Strömungskanalstruktur 10 ansammeln kann. Durch die geneigt verlaufende Formgebung des Randabschnitts ist das Baumaterial nach dem Prinzip eines Trichters "gezwungen" in die Strömungskanalstruktur 10 zu gelangen.

Das Führungselement 13 ist im Bereich eines freien Endes, d. h. im Bereich des Schließabschnitts 14, zusätzlich mit einem zu dem randabschnittseitigen Flächenabschnitt 17 des Deckelelements 16 gegengleich ausgebildeten Flächenabschnitt ausgebildet. Derart kann eine (weiter verbesserte) Abdichtung der Strömungskanalstruktur 10 in der Schließstellung des Führungselements 13 realisiert werden, welche eine effiziente Durchströmung der Strömungskanalstruktur 10 mit dem Strömungsfluid gewährleistet.

## Patentansprüche

1. Pulvermodul (1) für eine Vorrichtung zur additiven Herstellung dreidimensionaler Objekte, umfassend eine einen mit pulverförmigem Baumaterial befüllbaren Pulverraum (4) begrenzende Pulverkammer (3) sowie eine in dem Pulverraum (4) angeordnete, den Pulverraum (4) bodenseitig begrenzende Trageinrichtung (6), wobei zwischen wenigstens einer den Pulverraum (4) begrenzenden Pulverkammerwandung (5) und der Trageinrichtung (6) ein sich zumindest abschnittsweise entlang der den Pulverraum (4) begrenzenden Pulverkammerwandung (5) erstreckender Spaltraum (8) gebildet ist, durch welchen pulverförmiges Baumaterial aus dem Pulverraum (4) in einen unterhalb der Trageinrichtung (6) liegenden Pulvermodulbereich gelangen kann, wobei der Spaltraum (8) in einen Aufnahmebereich (9) eines an der Pulverkammer (3) angeordneten oder ausgebildeten Aufnahmeelements (2) mündet, wobei der Aufnahmebereich (9) als zur Aufnahme von Baumaterial aus dem Spaltraum (8) eingerichtete, insbesondere ringartig umlaufende, Strömungskanalstruktur (10) ausgebildet ist oder eine solche umfasst, wobei die Strömungskanalstruktur (10) eine einseitig offene Querschnittsgeometrie aufweist, wobei die Strömungskanalstruktur (10) nach oben offen ist, wobei die Öffnung der Strömungskanalstruktur (10) dem durch die Pulverkammer (3) begrenzten Pulverraum (4) zugewandt ist, wobei die Strömungskanalstruktur (10) als nutkanalartige Ausnehmung in dem Aufnahmebereich (9) ausgebildet ist.

2. Pulvermodul nach Anspruch 1, **dadurch gekennzeichnet, dass** die Strömungskanalstruktur (10) sich entlang den Abmessungen, insbesondere den Außen- oder Innenabmessungen, der Trageinrichtung (6) oder der Pulverkammerwandung (5) oder einem zwischen diesen liegenden Bereich erstreckend ausgebildet ist.

3. Pulvermodul nach einem der vorhergehenden Ansprüche, **gekennzeichnet durch** ein, insbesondere der den Spaltraum (8) begrenzenden Pulverkammerwandung (5) gegenüber liegend angeordnetes, Führungselement (13), welches den Spaltraum (8) zumindest abschnittsweise mit begrenzt.

4. Pulvermodul nach Anspruch 3, **dadurch gekennzeichnet, dass** das Führungselement (13) zwischen einer Schließstellung, in welcher das Führungselement (13) derart relativ zu der Strömungskanalstruktur (10), insbesondere gegen eine strömungskanalstrukturseitige Mündungsöffnung (12), bewegt ist, dass ein Eindringen von pulverförmigem Baumaterial in die Strömungskanalstruktur (10) nicht möglich ist, und einer Offenstellung, in welcher das Führungselement (13) derart relativ zu der Strömungskanalstruktur (10) bewegt ist, dass ein Eindringen von pulverförmigem Baumaterial in die Strömungskanalstruktur (10) möglich ist, bewegbar gelagert ist.

5. Pulvermodul nach Anspruch 3 oder 4, **dadurch gekennzeichnet, dass** das Führungselement (13) mit der Trageinrichtung (6) bewegungsgekoppelt ist.

6. Pulvermodul nach Anspruch 5, **dadurch gekennzeichnet, dass** das Führungselement (13) einstückig mit der Trageinrichtung (6) ausgebildet ist.

7. Pulvermodul nach Anspruch 6, **dadurch gekennzeichnet, dass** das Führungselement (13) einen prismen- bzw. zylinderartigen Fortsatz der Trageinrichtung (6) bildet.

8. Pulvermodul nach einem der vorhergehenden Ansprüche, **dadurch gekennzeichnet, dass** die Strömungskanalstruktur (10) eine dem Spaltraum (8) zugewandte Mündungsöffnung (12) aufweist, wobei der Aufnahmebereich (9) im Bereich wenigstens eines die strömungskanalstrukturseitige Mündungsöffnung (12) begrenzenden Randabschnitts mit wenigstens einem geneigt oder gewölbt verlaufend ausgebildeten Flächenabschnitt (15) ausgebildet ist.

9. Pulvermodul nach Anspruch 8 und einem der Ansprüche 3 bis 7, **dadurch gekennzeichnet, dass** das Führungselement (13), insbesondere im Bereich eines freien Endes, mit einer zu dem randabschnittseitigen Flächenabschnitt des Aufnahmeelements (2) gegengleich ausgebildeten Flächenabschnitt ausgebildet ist.

10. Pulvermodul nach einem der vorhergehenden Ansprüche, **gekennzeichnet durch** ein auf das Aufnahmeelement (9) aufsetzbares oder aufgesetztes, die strömungskanalstrukturseitige Mündungsöffnung (12) verkleinerndes Deckelelement (16), wobei das Deckelelement (16) im Bereich wenigstens eines die strömungskanalstrukturseitige Mündungsöffnung (12) begrenzenden Randabschnitts mit wenigstens einem geneigt oder gewölbt verlaufend ausgebildeten Flächenabschnitt (17) ausgebildet ist.

11. Pulvermodul nach Anspruch 10 und einem der Ansprüche 3 bis 9, **dadurch gekennzeichnet, dass** das Führungselement (13), insbesondere im Bereich eines freien Endes, mit einer zu dem randabschnittseitigen Flächenabschnitt (17) des Deckelelements (16) gegengleich ausgebildeten Flächenabschnitt ausgebildet ist.

12. Pulvermodul nach einem der vorhergehenden Ansprüche, **dadurch gekennzeichnet, dass** die Strömungskanalstruktur (10) wenigstens ein strömungsbeeinflussendes, insbesondere durch eine gezielte Veränderung der Querschnittsgeometrie der Strömungskanalstruktur (10) gebildete, Strömungselement umfasst.

13. Pulvermodul nach einem der vorhergehenden Ansprüche, **dadurch gekennzeichnet, dass** das Aufnahmeelement (9) wenigstens ein Anschlusselement (11) zum Anschluss einer Strömungserzeugungseinrichtung, welche zur Erzeugung einer die Strömungskanalstruktur (10) durchströmenden Fluidströmung, insbesondere Saug- oder Gebläseströmung, zur Entfernung von in der Strömungskanalstruktur (10) aufgenommenem pulverförmigen Baumaterial aus der Strömungskanalstruktur (10) eingerichtet ist, umfasst.

14. Pulvermodul nach einem der vorhergehenden Ansprüche, **dadurch gekennzeichnet, dass** das Pulvermodul (1) ein Auffangmodul, ein Baumodul oder ein Dosiermodul ist.

15. Vorrichtung zur additiven Herstellung dreidimensionaler Objekts, **dadurch gekennzeichnet, dass** sie wenigstens ein Pulvermodul (1) nach einem der vorhergehenden Ansprüche umfasst.

## Claims

1. A powder module (1) for an apparatus for additive manufacturing of three-dimensional objects, comprising: a powder chamber (3) limiting a powder room (4) that can be filled with powdered construction material and a carrying device (6) arranged in the powder room (4) and limiting the powder room (4) at the bottom, wherein between at least one powder chamber wall (5) limiting the powder room (4), and the carrying device (6) a gap (8) extending at least partially along the powder chamber wall (5) limiting the powder room (4) is formed, through which powdered construction material from the powder room (4) can enter into a powder module section lying below the carrying device (6), **characterised in that** the gap (8) opens out into a receiving section (9) of a receiving element (2) arranged or formed on the powder chamber (3), wherein the receiving section (9) is formed as or comprises an especially ring-shaped circumferential flow channel structure (10), provided for receiving construction material from the gap (8), wherein the flow channel structure (10) has a cross-section geometry open on one side, wherein the flow channel structure is open on top, wherein the opening of the flow channel structure is facing the powder room (4) limited by the powder chamber (3), wherein the flow channel structure (10) is formed as a groove channel-shaped recess in the receiving section.

2. Powder module according to claim 1, **characterised in that** the flow channel structure (10) is formed to extend along the dimensions, especially the outer or inner dimensions, of the carrying device (6) or the powder chamber wall (5) or a section in between.

3. Powder module according to any one of the previous claims, **characterised by** a guide element (13) arranged opposite the powder chamber wall (5) limiting the gap (8), said element also limiting the gap (8) at least partially.

4. Powder module according to claim 3, **characterised in that** the guide element (13) is movably supported between a closing position in which the guide element (13) is moved relative to the flow channel structure (10), especially toward an opening aperture (12) of the flow channel structure such that an intrusion of powdered construction material into the flow channel structure (10) is not possible, and an open position in which the guide element (13) is moved relative to the flow channel structure (10) such that an intrusion of powdered construction material into the flow channel structure (10) is possible.

5. Powder module according to claim 3 or 4, **characterised in that** the guide element (13) is movably coupled with the carrying device (6).

6. Powder module according to claim 5, **characterised in that** the guide element (13) is integrally formed with the carrying device (6).

7. Powder module according to claim 6, **characterised in that** the guide element (13) forms a prism-like or cylindrical extension of the carrying device (6).

8. Powder module according to any one of the previous claims, **characterised in that** the flow channel structure (10) has an opening aperture (12) facing the gap (8), wherein the receiving section (9) in the section of at least one edge portion limiting the opening aperture (12) of the flow channel structure is formed with at least one surface section (15) that is formed inclined or curved.

9. Powder module according to claim 8 and any one of the claims 3 to 7, **characterised in that** the guide element (13), especially in the section of a free end, is formed with a surface section formed diametrically opposed to the edge portion surface section of the receiving element (2).

10. Powder module according to any one of the previous claims, **characterised by** a cover element (16) that can be or is attached to the receiving element (9) and that minimises the opening aperture (12) of the flow channel structure, wherein the cover element (16) in the section of at least one edge portion limiting the opening aperture (12) of the flow channel structure is formed with at least one surface section (17) that is formed inclined or curved.

11. Powder module according to claim 10 and any one of the claims 3 to 9, **characterised in that** the guide element (13), especially in the section of a free end, is formed with a surface section formed diametrically opposed to the edge portion surface section (17) of the cover element (16).

12. Powder module according to any one of the previous claims, **characterised in that** the flow channel structure (10) comprises at least one flow element affecting the flow and which is especially formed by a purposeful change of the cross-section geometry of the flow channel structure (10).

13. Powder module according to any one of the previous claims, **characterised in that** the receiving element (9) comprises at least one connecting element (11) for connecting a flow generation device which is provided to generate a fluid flow, especially suction flow or blower flow, flowing through the flow channel structure (10), for removing powdered construction material received in the flow channel structure (10) from the flow channel structure (10).

14. Powder module according to any one of the previous claims, **characterised in that** the powder module (1) is a collector module, a construction module or a metering module.

15. Apparatus for additive manufacturing of three-dimensional objects, **characterised in that** it comprises at least one powder module (1) as described in the previous claims.

## Revendications

1. Bloc de poudre (1) pour un dispositif servant à la fabrication additive d'objets tridimensionnels, comprenant une chambre à poudre (3) délimitant un espace à poudre (4) pouvant être rempli de matériau de construction pulvérulent ainsi qu'un système porteur (6) disposé dans l'espace à poudre (4), délimitant côté fond l'espace à poudre (4), dans lequel est formé entre au moins une paroi de chambre à poudre (5) délimitant l'espace à poudre (4) et le système porteur (6), un espace formant interstice (8) s'étendant au moins par endroits le long de la paroi de chambre à poudre (5) délimitant l'espace à poudre (4), par lequel du matériau de construction pulvérulent provenant de l'espace à poudre (4) peut parvenir dans une zone de bloc de poudre située sous le système porteur (6), dans lequel l'espace formant interstice (8) débouche dans une zone de logement (9) d'un élément de logement (2) disposé ou réalisé au niveau de la chambre à poudre (3), dans lequel la zone de logement (9) est réalisée en tant qu'une structure de canal d'écoulement (10) en particulier périphérique à la manière d'un anneau, mise au point pour loger du matériau de construction provenant de l'espace formant interstice (8) ou comprend une structure de ce type, dans lequel
la structure de canal d'écoulement (10) présente une géométrie de section transversale ouverte d'un côté, dans lequel la structure de canal d'écoulement (10) est ouverte vers le haut, dans lequel l'ouverture de la structure de canal d'écoulement (10) est tournée vers l'espace à poudre (4) délimité par la chambre à poudre (3), dans lequel la structure de canal d'écoulement (10) est réalisée en tant qu'évidement de type canal de rainure dans la zone de logement (9).

2. Bloc de poudre selon la revendication 1, **caractérisé en ce que** la structure de canal d'écoulement (10) est réalisée de manière à s'étendre le long des dimensions, en particulier des dimensions extérieures ou intérieures, du système porteur (6) ou de la paroi de chambre à poudre (5) ou d'une zone située entre celles-ci.

3. Bloc de poudre selon l'une quelconque des revendications précédentes, **caractérisé par** un élément de guidage (13) disposé de manière à faire face à la paroi de chambre à poudre (5) délimitant l'espace formant interstice (8), lequel délimite au moins par endroits l'espace formant interstice (8).

4. Bloc de poudre selon la revendication 3, **caractérisé en ce que** l'élément de guidage (13) est monté de manière à pouvoir être déplacé entre une position de fermeture, dans laquelle l'élément de guidage (13) est déplacé de telle manière par rapport à la structure de canal d'écoulement (10), en particulier contre une ouverture d'embouchure (12) du côté de la structure de canal d'écoulement qu'une entrée de matériau de construction pulvérulent dans la structure de canal d'écoulement (10) n'est pas possible, et une position d'ouverture, dans laquelle l'élément de guidage (13) est déplacé de telle manière par rapport à la structure de canal d'écoulement (10) qu'une entrée de matériau de construction pulvérulent dans la structure de canal d'écoulement (10) est possible.

5. Bloc de poudre selon la revendication 3 ou 4, **caractérisé en ce que** l'élément de guidage (13) est couplé en déplacement avec le système porteur (6).

6. Bloc de poudre selon la revendication 5, **caractérisé en ce que** l'élément de guidage (13) est réalisé d'un seul tenant avec le système porteur (6).

7. Bloc de poudre selon la revendication 6, **caractérisé en ce que** l'élément de guidage (13) forme un prolongement de type prisme ou cylindre du système porteur (6).

8. Bloc de poudre selon l'une quelconque des revendications précédentes, **caractérisé en ce que** la structure de canal d'écoulement (10) présente une ouverture d'embouchure (12) tournée vers l'espace formant interstice (8), dans lequel la zone de logement (9) est réalisée dans la zone d'au moins une section de bord délimitant l'ouverture d'embouchure (12) du côté de la structure de canal d'écoulement avec au moins une section de surface (15) réalisée de manière à s'étendre de manière inclinée ou de manière bombée.

9. Bloc de poudre selon la revendication 8 et l'une quelconque des revendications 3 à 7, **caractérisé en ce que** l'élément de guidage (13) est réalisé en particulier dans la zone d'une extrémité libre, avec une section de surface diamétralement opposée par rapport à la section de surface, du côté de la section de bord, de l'élément de logement (2).

10. Bloc de poudre selon l'une quelconque des revendications précédentes, **caractérisé par** un élément formant couvercle (16) pouvant être placé ou placé sur l'élément de logement(9), réduisant l'ouverture d'embouchure (12) du côté de la structure de canal d'écoulement, dans lequel l'élément formant couvercle (16) est réalisé dans la zone d'au moins une section de bord délimitant l'ouverture d'embouchure (12) du côté de la structure de canal d'écoulement avec au moins une section de surface (17) réalisée de manière à s'étendre de manière inclinée ou de manière bombée.

11. Bloc de poudre selon la revendication 10 et l'une quelconque des revendications 3 à 9, **caractérisé en ce que** l'élément de guidage (13) est réalisé en particulier dans la zone d'une extrémité libre avec une section de surface réalisée de manière diamétralement opposée par rapport à la section de surface (17) côté section de bord de l'élément formant couvercle (16).

12. Bloc de poudre selon l'une quelconque des revendications précédentes, **caractérisé en ce que** la structure de canal d'écoulement (10) comprend au moins un élément d'écoulement exerçant une incidence sur l'écoulement, formé en particulier par une modification ciblée de la géométrie de section transversale de la structure de canal d'écoulement (10).

13. Bloc de poudre selon l'une quelconque des revendications précédentes, **caractérisé en ce que** l'élément de logement (9) comprend au moins un élément de raccordement (11) servant à raccorder un système de production d'écoulement, lequel est mis au point pour produire un écoulement de fluide traversant la structure de canal d'écoulement (10), en particulier un écoulement d'aspiration ou de soufflante, servant à éliminer du matériau de construction pulvérulent logé dans la structure de canal d'écoulement (10) hors de la structure de canal d'écoulement (10).

14. Bloc de poudre selon l'une quelconque des revendications précédentes, **caractérisé en ce que** le bloc de poudre (1) est un bloc de collecte, un bloc de construction ou un bloc de dosage.

15. Dispositif servant à la fabrication additive d'objets tridimensionnels, **caractérisé en ce qu'il** comprend au moins un bloc de poudre (1) selon l'une quelconque des revendications précédentes.
